# EUROPÄISCHE PATENTSCHRIFT

(11) **EP 2 328 453 B1**
(45) Veröffentlichungstag und Bekanntmachung des Hinweises auf die Patenterteilung: **12.06.2019**
(21) Anmeldenummer: 09781576.5
(22) Anmeldetag: 06.08.2009
(51) Int. Cl.: A47L 15/42, A47L 15/48

(54) **VERFAHREN ZUM BETREIBEN EINER GESCHIRRSPÜLMASCHINE**
METHOD FOR OPERATING A DISHWASHER
PROCÉDÉ POUR FAIRE FONCTIONNER UN LAVE-VAISSELLE

(30) Priorität: 27.08.2008 DE 102008039888; 07.11.2008 DE 102008043551
(43) Veröffentlichungstag der Anmeldung: 08.06.2011
(73) Patentinhaber: BSH Hausgeräte GmbH, 81739 München (DE)
(72) Erfinder: ROSENBAUER, Michael, 86756 Reimlingen (DE)
(86) Internationale Anmeldenummer: PCT/EP2009/060232
(87) Internationale Veröffentlichungsnummer: WO 2010/023077

(56) Entgegenhaltungen:
- EP-A1- 0 358 279
- WO-A1-2006/063895
- WO-A1-2010/012716
- DE-A1- 2 016 831
- DE-A1- 2 441 361
- DE-A1- 10 353 774
- DE-A1-102005 004 089

## Beschreibung

Die Erfindung betrifft ein Verfahren zum Betreiben einer Geschirrspülmaschine, insbesondere einer Haushalts-Geschirrspülmaschine, nach dem Oberbegriff des Patentanspruchs 1.

Es sind Geschirrspülmaschinen bekannt, die Spülprogramme durchlaufen, die eine Mehrzahl von Programmschritten umfassen, wie z.B. Vorspülen, Reinigen, Zwischenspülen, Klarspülen und Trocknen des gereinigten Spülguts. Dabei wird während einiger der Programmschritte, wie z.B. dem Vorspülen oder Reinigen, Spülgut mit Flüssigkeit zur Schmutzablösung beaufschlagt, wobei die Flüssigkeit zur Steigerung der Reinigungswirkung mit einem als Durchlauferhitzer ausgebildeten Heizmittel erwärmt wird und wie z.B. während eines Programmschritts Reinigen Reinigungsmittel zugegeben werden.

Aus der DE 2005 004 089 A1 ist ein Betriebsverfahren für eine Geschirrspülmaschine bekannt, bei dem von einer Heizung erwärmte Luft zur Desorption eines reversibel dehydrierbaren Materials aus einem Spülbehälter durch eine Sorptionskolonne mit reversibel dehydrierbarem Material in den Spülbehälter zur Erwärmung der Spülflotte und/oder des Spülgutes geleitet wird, wobei die desorbierte Feuchtigkeit dem Spülbehälter zugeführt werden kann. Die desorbierte Feuchtigkeit dient hierbei dazu, die Luft im Spülbehälter zu erwärmen. Auf diese Weise soll der elektrische Energiebedarf zum Beheizen der Spülflotte gesenkt werden.

Weiterhin ist aus der DE 24 41 361 A1 ein Betriebsverfahren für eine Geschirrspülmaschine bekannt, bei dem während einer ersten Phase eines Programmabschnittes eine geringe Flüssigkeitsmenge erwärmt sowie mit geringem Druck auf das Geschirr gesprüht wird, wobei die Spülflüssigkeitsmenge in einer zweiten Phase durch Zufuhr von kaltem Frischwasser vergrößert sowie mit erhöhtem Druck auf das Geschirr gesprüht wird. Dabei soll, indem lediglich die geringe Flüssigkeitsmenge der ersten Phase beheizt wird, der Energiebedarf gesenkt werden.

Der Erfindung liegt die Aufgabe zugrunde, die Reinigungsleistung weiter zu steigern.

Die Erfindung geht aus von einem Verfahren zum Betreiben einer Geschirrspülmaschine, insbesondere einer Haushalts-Geschirrspülmaschine, bei dem während wenigstens einer ersten Phase ein Betrieb mit einer ersten vorgegebenen Flüssigkeitsmenge erfolgt, und während einer zweiten Phase ein Betrieb mit einer zweiten vorgegebenen Flüssigkeitsmenge erfolgt, wobei die erste Flüssigkeitsmenge geringer ist als die zweite Flüssigkeitsmenge,

Erfindungsgemäß ist vorgesehen, dass zum Erhöhen der ersten Flüssigkeitsmenge auf den Wert der zweiten Flüssigkeitsmenge eine in einem Flüssigkeitsspeicher gespeicherte Flüssigkeitsmenge zugeführt wird. Dies erlaubt, insbesondere in einem Programmschritt mit Reinigungswirkung wie dem Programmschritt Reinigen, durch Erhöhung der Drehzahl einer Umwälzpumpe den Sprühdruck der aus Sprüharmen der Geschirrspülmaschine austretenden Flüssigkeit zu erhöhen und damit die Reinigungsleitung zu steigern, ohne das zusätzlich Flüssigkeit, wie z.B. Wasser aus einem hausseitigen Wasserversorgungssystem, entnommen werden muss. Somit wird eine Schonung natürlicher Ressourcen ermöglicht. Dabei kann in dem Flüssigkeitsspeicher, Flüssigkeit, wie z.B. Wasser wie Frischwasser oder auch verwendete Spülflotte, in dem Zeitraum zwischen zwei Inbetriebnahmen der Geschirrspülmaschine zwischengespeichert werden, also zwischen zwei Spülprogrammdurchläufen, die je aus einer Mehrzahl von Programmschritten, wie z.B. Vorspülen, Reinigen, Zwischenspülen, Klarspülen und/oder Trocknen bestehen.

Dabei ist erfindungsgemäß vorgesehen, dass als Flüssigkeitsspeicher ein Trocknungsmittel verwendet wird. Dies erlaubt es, Flüssigkeit zwischenzuspeichern und/oder durch Abwärme zu erwärmen und/oder gegebenenfalls auch wiederzuverwenden, so dass insgesamt der Wasserbedarf reduziert werden kann.

Ferner ist erfindungsgemäß vorgesehen, dass während der ersten Phase eine Flüssigkeitsmenge durch einen Desorptionsvorgang des Trocknungsmittels erwärmt wird. Dies erlaubt eine besonders energieeffiziente Reinigung mit einer erwärmten Flüssigkeit, wie z.B. mit Reinigungsmitteln versetztes Wasser.

Erfindungsgemäß ist vorgesehen, dass während der ersten Phase und der zweiten Phase mittels einer Umwälzpumpe eine Flüssigkeitsmenge umgewälzt wird, wobei die Umwälzpumpe während der zweiten Phase mit einer höheren Drehzahl betrieben wird als während der ersten Phase. Dies erlaubt es, insbesondere während der zweiten Phase die Reinigungsleistung deutlich zu steigern.

In einer Weiterbildung ist vorgesehen, dass aus dem Trocknungsmittel im Wesentlichen eine Flüssigkeitsmenge zwischen 0,1 und 1 l, insbesondere zwischen 0,2 und 0,5 l, zugeführt wird. Somit kann eine bei einem Trocknungsvorgang im Trocknungsmittel gespeicherte Flüssigkeitsmenge im Wesentlichen vollständig wiederverwendet werden, um die Reinigungsleistung zu steigern.

Ferner ist in einer Weiterbildung vorgesehen, dass ein für ein exothermisches Trocknen geeignetes Trocknungsmittel verwendet wird, insbesondere zum Trocknen von gereinigtem Spülgut.

Hierzu ist in einer Weiterbildung vorgesehen, dass ein reversibel dehydrierbares Trocknungsmittel, insbesondere Zeolith, eines Sorptionstrocknungssystems verwendet wird. Dieses Trocknungsmaterial weist ein hohes Wasseraufnahmevermögen auf sowie eine gute reversible Dehydrierbarkeit.

Ferner ist in einer Weiterbildung vorgesehen, dass während der zweiten Phase eine Flüssigkeitsmenge durch eine Wasserheizung erwärmt wird. Dies erlaubt eine rasche weitere Erwärmung auf höhere Temperaturen und dadurch eine weitere Steigerung der Reinigungsleistung.

Dabei ist in einer Weiterbildung vorgesehen, dass die Umwälzpumpe während der zweiten Phase wenigstens zeitweise im Rundlaufzustand betrieben wird. Dies erlaubt einen besonders geräuscharmen Betrieb, da im Rundlaufzustand die Umwälzpumpe keine Luft ansaugt.

Ferner wird die Aufgabe der Erfindung gelöst durch eine Geschirrspülmaschine, insbesondere eine Haushalts-Geschirrspülmaschine, insbesondere mit einem Sorptionstrocknungssystem, die wenigstens während einer ersten Phase einen Betrieb mit einer ersten vorgegebenen Flüssigkeitsmenge durchführt, bei dem eine Erwärmung der ersten Flüssigkeitsmenge durch einen Desorptionsvorgang eines Trocknungsmittels und eine Erhöhung der ersten Flüssigkeitsmenge auf den Wert einer zweiten Flüssigkeitsmenge erfolgt, indem eine in dem Trocknungsmittel gespeicherte Flüssigkeitsmenge zugeführt wird, und die während einer zweiten Phase einen Betrieb mit der zweiten vorgegebenen Flüssigkeitsmenge durchführt, wobei erfindungsgemäß vorgesehen ist, dass eine Umwälzpumpe zum Umwälzen der jeweiligen Flüssigkeitsmenge während der ersten und zweiten Phase vorgesehen ist, wobei die Umwälzpumpe während der zweiten Phase mit einer höheren Drehzahl als während der ersten Phase betrieben ist.

Sonstige Weiterbildungen der erfindungsgemäßen Geschirrspülmaschine sind in den Unteransprüchen angegeben.

Die Erfindung und ihre Weiterbildungen werden nachfolgend anhand von Zeichnungen näher erläutert.

Es zeigen:
- Fig. 1: eine schematische Darstellung eines Ausführungsbeispiels einer erfindungsgemäßen Geschirrspülmaschine mit einem Sorptionstrocknungssystem,
- Fig. 2: eine schematische Darstellung des Temperaturverlaufs während eines ersten Ausführungsbeispiels eines erfindungsgemäßen Spülprogrammdurchlaufs,
- Fig. 3: eine schematische Darstellung des Temperaturverlaufs eines weiteren, zweiten Ausführungsbeispiels eines erfindungsgemäßen Spülprogrammdurchlaufs, und
- Fig. 4: eine schematische Darstellung des Temperaturverlaufs eines weiteren, dritten Ausführungsbeispiels eines erfindungsgemäßen Spülprogrammdurchlaufs.

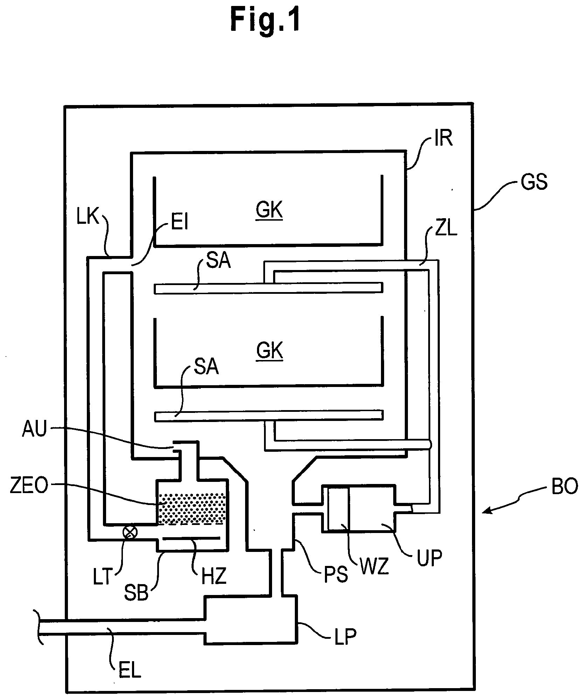

Es wird zunächst auf Figur 1 Bezug genommen.

Eine im vorliegenden Ausführungsbeispiel als Haushalts-Geschirrspülmaschine ausgebildete Geschirrspülmaschine GS weist einen als Spülbehälter dienenden Innenraum IR auf, der mittels einer an der Geschirrspülmaschine GS schwenkbar angelenkten Tür (nicht dargestellt) zum Beladen und Entladen geöffnet bzw. geschlossen werden kann. In dem Innenraum IR der Geschirrspülmaschine GS sind Geschirrkörbe GK zur Aufnahme von zu reinigendem Spülgut vorgesehen, die aus dem Innenraum IR der Geschirrspülmaschine GS herausgezogen werden können, um das Be- und Entladen zu erleichtern.

Um das in den Geschirrkörben GK gelagerte Spülgut zu reinigen sind in dem Innenraum IR der Geschirrspülmaschine GS als Sprüharme SA ausgebildete Mittel zur Beaufschlagung von Spülgut mit Flüssigkeit vorgesehen, wobei es sich bei der Flüssigkeit um z.B. mit Reinigungsmitteln oder mit Klarspüler versetztes Wasser handeln kann, um so eine Reinigungswirkung bzw. streifenfreie Trocknung zu bewirken. Die vom Spülgut herabfließende Flüssigkeit sammelt sich in einem Pumpensumpf PS, der im Bodenbereich des Innenraumes IR der Geschirrspülmaschine GS angeordnet ist.

Die Sprüharme SA sind über eine Zuführleitung ZL mit einer Umwälzpumpe UP flüssigkeitsleitend verbunden, die neben anderen Bauteilkomponenten der Geschirrspülmaschine GS in einer Bodenbaugruppe BO unterhalb des Innenraums IR der Geschirrspülmaschine GS angeordnet ist. Im Betrieb, d.h. bei laufender Umwälzpumpe UP, saugt die Umwälzpumpe UP die sich in dem Pumpensumpf PS angesammelte Flüssigkeit an und fördert diese durch die Zuführleitung ZL zu den Sprüharmen SA. Um die durch den Betrieb der Umwälzpumpe UP umgewälzte Flüssigkeit zu erwärmen weist die Umwälzpumpe eine integrierte Wasserheizung WZ zur Erwärmung der Flüssigkeit auf. Alternativ kann neben der Umwälzpumpe UP ein separater Durchlauferhitzer oder eine andere Wasserheizung vorgesehen sein. Zum Entleeren des Innenraums IR der Geschirrspülmaschine GS ist eine Laugenpumpe LP vorgesehen, die ebenfalls in flüssigkeitsleitender Verbindung mit dem Pumpensumpf PS steht und mit einer Entsorgungsleitung EL an ein hausseitiges Abwasserentsorgungsnetz angeschlossen werden kann.

Ferner weist die Geschirrspülmaschine GS ein Sorptionstrockungssystem auf, mit dem in den Geschirrkörben GK angeordnetes und gereinigtes Spülgut am Ende eines Spülprogrammdurchlaufs getrocknet werden kann. Hierzu ist in der Bodenbaugruppe BO ein Sorptionsbehälter SB vorgesehen, der über einen Luftkanal LK mit einem Einlass EI luftleitend verbunden ist, wobei zur Erzeugung einer Zwangsdurchströmung ein Lüfter LT vorgesehen ist. Um die durch den Einlass EI angesaugte und durch den Lüfter LT in den Sorptionsbehälter beförderte Luft wieder in den Innenraum IR der Geschirrspülmaschine GS zurückzufördern ist eine Ausblasöffnung AU im Bodenbereich des Innenraums IR Geschirrspülmaschine GS vorgesehen.

Um eine Trocknung von gereinigtem Spülgut zu bewirken, wird durch den Lüfter LT Luft aus dem Innenraum IR der Geschirrspülmaschine GS angesaugt, durch den Sorptionsbehälter SB geleitet und wieder durch die Ausblasöffnung AU zurück in den Innenraum IR der Geschirrspülmaschine GS geleitet. Um hierbei die umgewälzte Luft zu Trocknen ist in dem Sorptionsbehälter SB ein Trocknungsmittel zur Durchführung einer exothermen Trocknung vorgesehen. Es handelt sich dabei um ein reversibel dehydrierbares Trocknungsmaterial, z.B. Zeolith, das auf Grund seiner hydroskopischen Eigenschaft Wasser aufnimmt, wobei zeitgleich Wärmeenergie freigesetzt wird. Durch diese freigesetzte Wärmeenergie wird eine Erwärmung der umgewälzten Luft bewirkt, was zugleich das Feuchtigkeitsaufnahmevermögen der umgewälzten Luft erhöht. Am Ende eines Trocknungsvorgangs ist eine Flüssigkeitsmenge, in dem Trocknungsmaterial ZEO gespeichert.

Um das Aufnahmevermögen des Trocknungsmittels ZEO für einen erneuten Spülprogrammdurchlauf wieder herzustellen, ist eine Luftheizung HZ vorgesehen, die im vorliegenden Ausführungsbeispiel in dem Sorptionsbehälter SB angeordnet ist. Es ist jedoch auch möglich, eine Luftheizung außerhalb des Sorptionsbehälters SB anzuordnen, z.B. in dem Luftkanal LK, um eine Erwärmung der in den Sorptionsbehälter SB geförderten Luft zu bewirken. Um die in den Trocknungsmaterial ZEO gespeicherte Flüssigkeitsmenge auszutreiben, wird eine mit dem Lüfter LT erzeugte Luftströmung erwärmt, so dass das Trocknungsmaterial ZEO auf Temperaturen erhitzt werden kann, bei denen die in dem Trocknungsmaterial ZEO gespeicherte Wassermenge wieder freigesetzt werden kann.

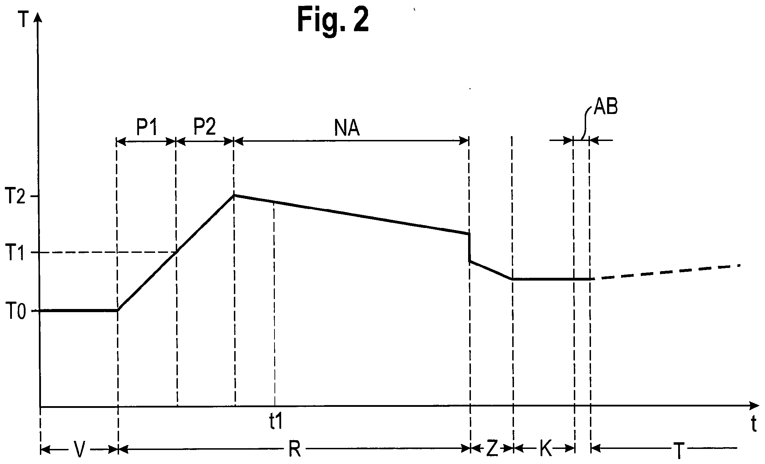

Es wird nun zusätzlich auf die Figuren 2 bis 4 Bezug genommen.

Geschirrspülmaschinen GS durchlaufend zur Reinigung und Trocknung von zu reinigendem Spülgut, Spülprogramme, die aus einer Mehrzahl von Programmschritten bestehen, die nacheinander durchlaufen werden. Ein derartiges Programm kann aus den Programmschritten Vorspülen V, Reinigen R, Zwischenspülen Z, Klarspülen K und Trocknen T bestehen, wobei einzelne Programmschritte, wie z. B. das Vorspülen V oder Zwischenspülen Z auch ausgeblendet werden können, während es auch denkbar ist, einzelne Programmschritte mehrfach zu durchlaufen, wie z.B. das Zwischenspülen Z. Während des Vorspülens V wird bspw. Spülgut mit Wasser ohne Zugabe von Reinigungsmitteln beaufschlagt, wobei dies entweder mit nicht erwärmten Wasser oder mit mittels einer Heizung erwärmten Wasser durchgeführt wird. Hierzu kann Wasser verwendet werden, dass in einem Wassertank (nicht dargestellt) gespeichert wurde. Ein derartiger Wassertank kann mit der Umgebung der Geschirrspülmaschine in wärmeleitender Verbindung stehen, so dass in dem Wassertank zwischengespeicherte Flüssigkeit, wie z.B. Wasser aus einem hausseitigen Versorgungssystem, sich auf Raumtemperatur erwärmen kann. In dem Reinigungsschritt R erfolgt eine Reinigung von Spülgut durch Beaufschlagung von mit Reinigungsmitteln versetztem Wasser, d.h. während des Reinigungsschritts erfolgt eine Reinigungsmittelzugabe. Ferner erfolgt eine Erwärmung der Flüssigkeit, um so die Reinigungswirkung des Reinigungsmittels zu steigern. Dabei setzt sich der Reinigungsschritt R aus einer Heizphase P1, P2 zusammen, in der die Flüssigkeit in der Geschirrspülmaschine GS mittels Heizmitteln erwärmt wird, bis eine vorgegebene Maximaltemperatur erreicht ist und einer anschließenden Nachwaschphase NA zusammen, während der bei ausgeschalteten Heizungsmittel die sich langsam abkühlende Flüssigkeit mittels der Umwälzpumpe UP umgewälzt wird. In dem Programmschritt Zwischenspülen Z wird das Spülgut mit Flüssigkeit beaufschlagt, um so Schmutzreste aus der Geschirrspülmaschine GS zu fördern. Der nächste Programmschritt ist das Klarspülen K zur Vorbereitung des Programmschritts Trocknen T, bei dem mit Klarspülmittel versetztes Wasser mittels der Umwälzpumpe umgewälzt und über die Sprüharme SA auf das nun gereinigte Spülgut aufgebracht wird. Abschließend erfolgt der Programmschritt Trocknen T, in dem das Spülgut nicht mehr mit Flüssigkeit beaufschlagt wird, sondern durch Betrieb des Lüfters LT eine durch den Innenraum IR der Geschirrspülmaschine GS und dem Sorptionsbehälter SB zirkulierende Luftströmung erzeugt wird. Zwischen den einzelnen Programmschritten kann ein vollständiger oder wenigstens teilweiser Flüssigkeitswechsel durchgeführt werden, d.h., die Geschirrspülmaschine GS wird mittels der Laugenpumpe LP und der Entsorgungsleitung EL entleert und durch eine zu einem hausseitigen Versorgungssystem eine Verbindung herstellende Versorgungsleitung (nicht dargestellt) wieder neu befüllt werden.

Bei dem Spülprogrammablauf gemäß Figur 2 erfolgt nur in dem Programmschritt Reinigen R eine Erwärmung von Flüssigkeit. Dabei wird ausgehend von einer Starttemperatur T0 zuerst während einer ersten Phase P1 die mit der Umwälzpumpe UP umgewälzte Flüssigkeit durch die Luftheizung HZ in dem Sorptionsbehälter SB auf eine maximale Temperatur T1 erwärmt, wobei zugleich der Lüfter LT eine durch den Innenraum IR der Geschirrspülmaschine GS zirkulierende Luftströmung erzeugt. Durch die Luftheizung HZ wird das Trocknungsmaterial ZEO in den Sorptionsbehälter SB auf Temperaturen erhitzt, bei denen die in dem Trocknungsmaterial ZEO gespeicherte Wassermenge aus dem Trocknungsmaterial ZEO ausgetrieben und durch die Ausblasöffnung AU in dem Innenraum IR Geschirrspülmaschine GS gefördert wird. Durch die Wirkung der Luftheizung HZ ist diese Flüssigkeitsmenge aufgeheizt und bewirkt somit durch die Vermischung der bereits mit der Umwälzpumpe UP umgewälzten Flüssigkeit eine Erwärmung der Gesamtflüssigkeitsmenge im Innenraum IR Geschirrspülmaschine GS. Dadurch, dass mittels der Luftheizung HZ während des Programmschritts Reinigen R eine Aufheizung bis auf die erste Temperatur T1 erfolgt, ist sichergestellt, dass das Trockenmaterial ZEO durch die Umwälzung von verhältnismäßig kalter und trockener Luft aus dem Innenraum IR Geschirrspülmaschine GS zuverlässig und vollständig desorbiert werden kann. Anstelle eines starren Spülprogrammablaufs, bei dem bei einem ersten Programmabschnitt, bei dem eine Erwärmung von Flüssigkeit erfolgt, ein Desorptionsvorgang durchgeführt wird, kann es auch in einem alternativen Ausführungsbeispiel vorgesehen sein, den Desorptionsvorgang beeinflussende Parameter zur Bestimmung des Zeitpunktes zur Durchführung der Desorption auszuwerten. Hierbei kann es sich die Lufttemperatur und die Wasserzulauftemperatur handeln. Beispielsweise kann ein Desorptionsvorgang in einem Programmschritt Reinigen oder Klarspülen oder auch, wenn dies zweckmäßig ist, während des Programmschritts Vorspülen erfolgen.

Während des Desorbierens mittels der Luftheizung HZ wird die Ausblasöffnung AU in dem Innenraum IR Geschirrspülmaschine GS gekühlt, um so sicherzustellen, dass es auf Grund der Heizleistung der Luftheizung HZ zu keiner übermäßigen Erwärmung der Ausblasöffnung HZ mit Überhitzungsschäden kommt.

Hierzu wird während des Betriebs der Luftheizung HZ, d.h. z.B. während der Phase P1, die Umwälzpumpe UP betrieben, so dass durch die Umwälzpumpe Flüssigkeit von dem Pumpensumpf PS durch die Zuführleitung zu dem Sprüharm SA gefördert wird. Hierdurch werden die Sprüharme SA in Rotation versetzt und bewirken durch Besprühen der Ausblasöffnung AU, insbesondere einer die Ausblasöffnung AU abdeckenden Kappe mit Flüssigkeit, eine Kühlung derselben.

In einer nächsten Phase P2 des Programmschritts Reinigen R wird mittels der Wasserheizung WZ die Flüssigkeitsmenge ausgehend von der ersten Temperatur T1 auf die zweite Temperatur T2 aufgeheizt.

Um die Reinigungswirkung während des Programmschritts Reinigen R zu erhöhen, ist vorgesehen durch Erhöhung der Drehzahl der Umwälzpumpe UP den Sprühdruck der aus dem Sprüharm SA austretenden Wasserstrahlen zu steigern. Hierzu wird während des Programmschritts Reinigen R während der Nachwaschphase NA die mittels der Umwälzpumpe UP umgewälzte Flüssigkeitsmenge durch einen Nachfüllschritt erhöht, bspw. zum Zeitpunkt t1 (vgl. Figur 2) und anschließend die Drehzahl der Umwälzpumpe UP erhöht, z.B. kontinuierlich, bis die Umwälzpumpe wieder unter Rundlaufbedingung läuft, d.h., während des Betriebs keine Luftblasen ansaugt, was die Förderleistung der Umwälzpumpe UP reduziert und zu einer unerwünschten Geräuschentwicklung führt. Hierdurch wird es möglich, die während des Desorbierens freigesetzte Flüssigkeitsmenge, die im Trocknungsmaterial ZEO gespeichert war, bei der Bemessung der nachzufüllenden Flüssigkeitsmenge zu berücksichtigen und somit den Gesamtwasserbedarf bei verbesserter Reinigungsleistung zu reduzieren.

Zwischen dem Programmschritt Klarspülen K und dem Programmschritt Trocknen T ist eine Abtropfphase AB vorgesehen (vgl. Figur 2), während der am gereinigten Spülgut anhaftende Flüssigkeit, d.h. mit Klarspüler versetztes Wasser, schwerkraftbedingt von dem Spülgut ablaufen kann und sich in den Pumpensumpf PS des Innenraums IR der Geschirrspülmaschine GS sammeln kann. Hierdurch wird die von dem Sorptionstrocknungsystem aufzunehmende Flüssigkeitsmenge reduziert und damit die Dauer des Programmschritt Trocknen T.

Vor dieser Abtropfphase AB, d.h. am Ende des Programmschritts Klarspülen K, erfolgt ein Abpumpvorgang, bei dem die mit Klarspüler versetzte Flüssigkeit mittels der Laugenpumpe LP durch die Entleerungsleitung EL in ein hausseitiges Abwasserentsorgungssystem gefördert wird. Es folgt die Abtropfphase AB, während der weder die Umwälzpumpe UP noch die Laugenpumpe LP sowie auch nicht der Lüfter LT oder eine der genannten Heizungen HZ, WZ in Betrieb sind. Nach Ablauf dieser Abtropfphase AB beginnt der Programmschritt Trocknen T durch Inbetriebnahme des Lüfters LT, so dass eine durch den Innenraum IR der Geschirrspülmaschine und dem Sorptionsbehälter SB zirkulierende Luftströmung erzeugt wird, um das gereinigte Spülgut in den Geschirrkörben GK zu trocknen. Am Ende des Programmschritts Trocknen T erfolgt ein weiterer Abpumpvorgang mittels der Laugenpumpe LP, mittels dem eine verbleibende Flüssigkeitsmenge aus der Geschirrspülmaschine GS durch die Entleerungsleitung EL in ein hausseitiges Abwasserentsorgungssystem gefördert wird. Alternativ hierzu kann auch vorgesehen sein, einen weiteren Abpumpvorgang zusätzlich oder alternativ zu Beginn des Programmschritts Trocknen T durchzuführen.

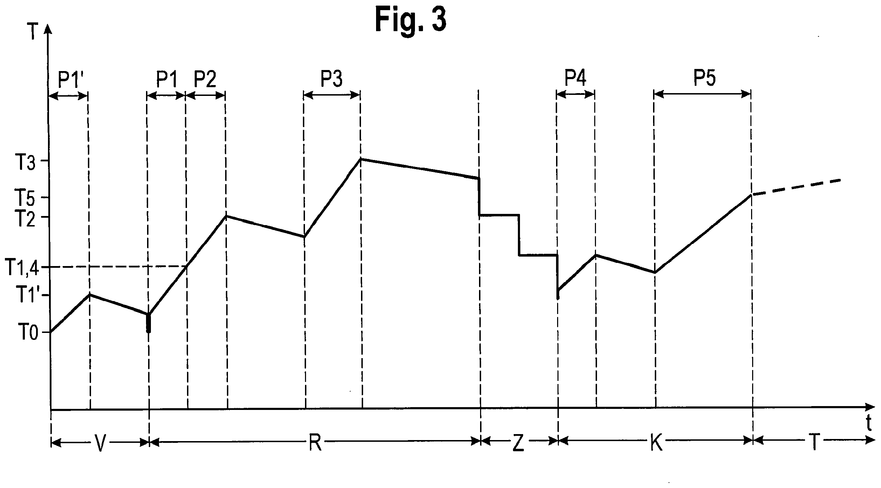

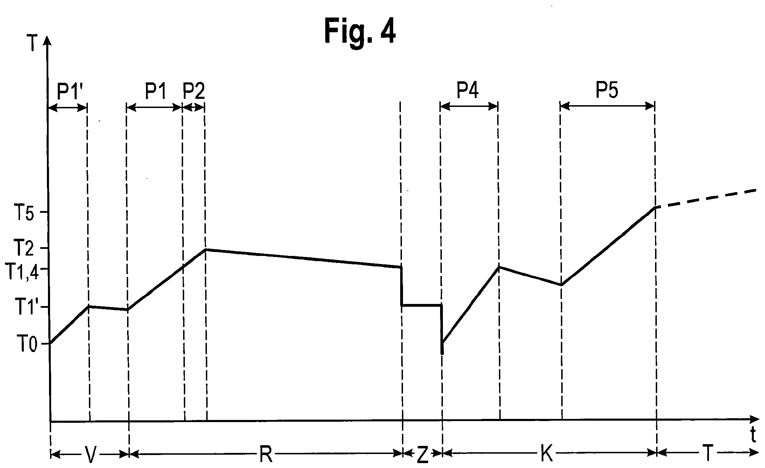

Bei dem Spülprogramm gemäß Figur 3 und 4 erfolgt eine Erwärmung von Flüssigkeit im ersten der Programmschritte, dem Programmschritt Vorspülen V. Hierzu wird mittels der Luftheizung HZ Flüssigkeit ausgehend von einer Starttemperatur T0 während einer Phase P1' auf eine Temperatur T1' erwärmt, in dem wie oben beschrieben mittels des Lüfters LT eine durch den Innenraum IR der Geschirrspülmaschine GS und dem Sorptionsbehälter SB zirkulierende Luftströmung erzeugt wird. Nach Erreichen der Temperatur T1' wird die Luftheizung HZ deaktiviert. Zu diesem Zeitpunkt ist das Trocknungsmaterial ZEO noch nicht vollständig desorbiert ist, d.h. in dem Trocknungsmaterial ZEO ist eine Restwassermenge gespeichert. Um diese Restwassermenge aus dem Trocknungsmaterial ZEO auszutreiben und somit ein wieder voll wasseraufnahmefähiges Trocknungsmaterial ZEO zu Beginn des Programmschritts Trocknen T zur Verfügung zu haben, wird im nachfolgenden Programmschritt Reinigen R zuerst die Flüssigkeit mittels der Luftheizung HZ auf eine Temperatur T1 aufgeheizt und anschließend durch Betrieb der Wasserheizung auf die Temperatur T2 aufgeheizt. Das heißt, die Desorptionsphase des Trocknungsmittels ZEO im Sorptionsbehälter SB ist in diesem Ausführungsbeispiel zweigeteilt und verteilt sich auf zwei Programmschritte, nämlich dem Programmschritt Vorspülen V und dem Programmschritt Reinigen R.

Um die Reinigungswirkung durch eine weitere Erhöhung der Temperatur zu steigern, kann eine weitere Phase P3 (vgl. Figur 3) vorgesehen sein, während der mit der Wasserheizung WZ eine weitere Erwärmung der Flüssigkeit auf eine Temperatur T3 erfolgt.

Um das Trocknungsergebnis am Ende des Programmschritts Trocknen T zu verbessern, ist bei den Ausführungsbeispielen gemäß den Figuren 3 und 4 vorgesehen, dass während des Klarspülschritts K eine Erwärmung der Flüssigkeit erfolgt. Hierzu wird während einer Phase P4 mittels der Wasserheizung WZ Flüssigkeit, bei der es sich um Wasser oder um mit Klarspüler versetztes Wasser handelt, auf eine Temperatur T4 aufgeheizt. Alternativ kann hierzu anstelle der Wasserheizung auch die Luftheizung HZ verwendet werden, um z.B. eine bisher im Programmverlauf nicht vollständig erfolgte Desorption zu vollenden. Zusätzlich kann während einer weiteren Phase P5 eine weitere Erwärmung der Flüssigkeit auf eine Temperatur T5 erfolgen, um die Trocknung mit der Sorptionstrocknungssystem zu verbessern.

### Bezugszeichenliste

- AB: Abtropfphase
- AU: Ausblassöffnung
- BO: Bodenbaugruppe
- EI: Einlass
- EL: Entsorgungsleitung
- GK: Geschirrkorb
- GS: Geschirrspülmaschine
- HZ: Luftheizung
- IR: Innenraum
- LK: Luftkanal
- LP: Laugenpumpe
- LT: Lüfter
- NA: Nachwaschphase
- P1': Phase 1'
- P1: Phase 1
- P2: Phase 2
- P3: Phase 3
- P4: Phase 4
- P5: Phase 5
- PS: Pumpensumpf
- SA: Sprüharm
- SB: Sorptionsbehälter
- t1: Nachfüllzeitpunkt
- T0: Starttemperatur
- T1': Temperatur
- T1: Temperatur
- T2: Temperatur
- T3: Temperatur
- T4: Temperatur
- T5: Temperatur
- UP: Umwälzpumpe
- WZ: Wasserheizung
- ZEO: Trocknungsmaterial
- ZL: Zuführleitung

## Patentansprüche

1. Verfahren zum Betreiben einer Geschirrspülmaschine (GS), insbesondere einer Haushalts-Geschirrspülmaschine, bei dem während wenigstens einer ersten Phase (P1, P1') ein Betrieb mit einer ersten vorgegebenen Flüssigkeitsmenge erfolgt und die erste Flüssigkeitsmenge durch einen Desorptionsvorgang eines Trocknungsmittels (ZEO) erwärmt wird, wobei die erste Flüssigkeitsmenge auf den Wert einer zweiten Flüssigkeitsmenge erhöht wird, indem eine in dem Trocknungsmittel (ZEO) gespeicherte Flüssigkeitsmenge zugeführt wird, und bei dem während einer zweiten Phase (P2) ein Betrieb mit der zweiten vorgegebenen Flüssigkeitsmenge erfolgt,
**dadurch gekennzeichnet, dass**
während der ersten Phase (P1, P1') und der zweiten Phase (P2) mittels einer Umwälzpumpe (UP) die jeweilige Flüssigkeitsmenge umgewälzt wird, wobei die Umwälzpumpe (UP) während der zweiten Phase (P2) mit einer höheren Drehzahl betrieben wird als während der ersten Phase (P1, P1').

2. Verfahren nach Anspruch 1, **dadurch gekennzeichnet, dass** aus dem Trocknungsmittel (ZEO) im Wesentlichen eine Flüssigkeitsmenge zwischen 0,1 und 1 l, insbesondere zwischen 0,2 und 0,5 l, zugeführt wird.

3. Verfahren nach Anspruch 1 oder 2, **dadurch gekennzeichnet, dass** das Trocknungsmittel (ZEO) ein für ein exothermisches Trocknen geeignetes Trocknungsmittel (ZEO), insbesondere zum Trocknen von gereinigtem Spülgut, ist.

4. Verfahren nach Anspruch 3, **dadurch gekennzeichnet, dass** das Trocknungsmittel ein reversibel dehydrierbares Trocknungsmittel (ZEO), insbesondere Zeolith, eines Sorptionstrocknungssystems ist.

5. Verfahren nach wenigstens einem der Ansprüche 1 bis 4, **dadurch gekennzeichnet, dass** während der zweiten Phase (P2) eine Flüssigkeitsmenge durch eine Wasserheizung erwärmt wird.

6. Verfahren nach einem der Ansprüche 1 bis 5, **dadurch gekennzeichnet, dass** die Umwälzpumpe (UP) während der zweiten Phase (P2) wenigstens zeitweise im Rundlaufzustand betrieben wird.

7. Verfahren nach wenigstens einem der Ansprüche 1 bis 6, **dadurch gekennzeichnet, dass** die gespeicherte Flüssigkeitsmenge während eines Programmschritts einer Mehrzahl von Programmschritten (V, R, Z, K, T) mit Reinigungswirkung, insbesondere einem Programmschritt Reinigen (R) mit Reinigungsmittelzugabe, zugeführt wird.

8. Geschirrspülmaschine (GS), insbesondere Haushalts-Geschirrspülmaschine, die wenigstens während einer ersten Phase (P1, P1') einen Betrieb mit einer ersten vorgegebenen Flüssigkeitsmenge durchführt, bei dem eine Erwärmung der ersten Flüssigkeitsmenge durch einen Desorptionsvorgang eines Trocknungsmittels (ZEO) und eine Erhöhung der ersten Flüssigkeitsmenge auf den Wert einer zweiten Flüssigkeitsmenge erfolgt, indem eine in dem Trocknungsmittel (ZEO) gespeicherte Flüssigkeitsmenge zugeführt wird, und die während einer zweiten Phase (P2) einen Betrieb mit der zweiten vorgegebenen Flüssigkeitsmenge durchführt,
**dadurch gekennzeichnet, dass**
eine Umwälzpumpe (UP) zum Umwälzen der jeweiligen Flüssigkeitsmenge während der ersten und zweiten Phase (P1, P1', P2) vorgesehen ist, wobei die Umwälzpumpe (UP) während der zweiten Phase (P2) mit einer höheren Drehzahl als während der ersten Phase (P1, P1') betrieben ist.

9. Geschirrspülmaschine (GS) nach Anspruch 8, **dadurch gekennzeichnet, dass** aus dem Trocknungsmittel (ZEO) im Wesentlichen eine Flüssigkeitsmenge zwischen 0,1 und 1 l, insbesondere zwischen 0,2 und 0,5 l, zuführbar ist.

10. Geschirrspülmaschine (GS) nach Anspruch 8 oder 9, **dadurch gekennzeichnet, dass** ein Sorptionstrocknungssystem für ein exothermisches Trocknen, insbesondere von gereinigtem Spülgut, vorgesehen ist, das das für ein exothermisches Trocknen geeignete Trocknungsmittel (ZEO) umfasst.

11. Geschirrspülmaschine (GS) nach Anspruch 10, **dadurch gekennzeichnet, dass** das Trocknungsmittel (ZEO) reversibel dehydrierbarbar ist, und insbesondere Zeolith aufweist.

12. Geschirrspülmaschine (GS) nach Anspruch 10 oder 11, **dadurch gekennzeichnet, dass** Mittel zur Erwärmung der ersten Flüssigkeitsmenge, insbesondere eine Luftheizung (HZ), während des Desorptionsvorgangs des Trocknungsmittels (ZEO) vorgesehen sind.

13. Geschirrspülmaschine (GS) nach wenigstens einem der Ansprüche 8 bis 12, **dadurch gekennzeichnet, dass** eine Wasserheizung (WZ) zur Erwärmung der zweiten Flüssigkeitsmenge während der zweiten Phase (P2) vorgesehen ist.

14. Geschirrspülmaschine (GS) nach wenigstens einem der Ansprüche 8 bis 13, **dadurch gekennzeichnet, dass** die Umwälzpumpe (UP) sich während der zweiten Phase (P2) wenigstens zeitweise im Rundlaufzustand befindet.

15. Geschirrspülmaschine (GS) nach wenigstens einem der Ansprüche 8 bis 14, **dadurch gekennzeichnet, dass** die Geschirrspülmaschine zur Durchführung einer Mehrzahl von Programmschritten (V, R, Z, K, T) ausgebildet ist, von denen bei wenigstens einem Programmschritt mit Reinigungswirkung, insbesondere einem Programmschritt Reinigen (R) mit Reinigungsmittelzugabe, die gespeicherte Flüssigkeitsmenge zuführbar ist.

## Claims

1. Method for operating a dishwasher (GS), in particular a household dishwasher, wherein during at least a first phase (P1, P1') operation takes place with a first predefined quantity of fluid and the first quantity of fluid is heated by a desorption process of a drying means (ZEO), wherein the first quantity of fluid is increased to the value of a second quantity of fluid by adding a quantity of fluid stored in the drying means (ZEO) and wherein during a second phase (P2) operation takes place with the second predefined quantity of fluid,
**characterised in that**
the respective quantity of fluid is circulated by means of a circulation pump (UP) during the first phase (P1, P1') and the second phase (P2), wherein the circulation pump (UP) is operated at a higher speed during the second phase (P2) than during the first phase (P1, P1').

2. Method according to claim 1, **characterised in that** essentially a quantity of fluid of between 0.1 and 1 l, in particular between 0.2 and 0.5 l, is added from the drying means (ZEO).

3. Method according to claim 1 or 2, **characterised in that** a drying means (ZEO) is a drying means (ZEO) suitable for exothermic drying, in particular for drying cleaned items.

4. Method according to claim 3, **characterised in that** the drying means is a reversibly dehydratable drying means (ZEO), in particular zeolite, of a sorption drying system.

5. Method according to at least one of claims 1 to 4, **characterised in that** a quantity of fluid is heated by a water heater during the second phase (P2).

6. Method according to one of claims 1 to 5, **characterised in that** the circulation pump (UP) is operated at least periodically in the true running state during the second phase (P2).

7. Method according to at least one of claims 1 to 6, **characterised in that** the stored quantity of fluid is added during a program step to a plurality of program steps (V, R, Z, K, T) with a cleaning action, in particular a program step wash (R) with the addition of detergent.

8. Dishwasher (GS), in particular a household dishwasher, which at least during a first phase (P1, P1') performs an operation with a first predefined quantity of fluid, in which the first quantity of fluid is heated by a desorption process of a drying means (ZEO) and the first quantity of fluid is increased to the value of a second quantity of fluid by adding a quantity of fluid stored in the drying means (ZEO) and which performs an operation with the second predefined quantity of fluid during a second phase (P2),
**characterised in that**
a circulation pump (UP) is provided to circulate the respective quantity of fluid during the first and second phases (P1, P1', P2), wherein the circulation pump (UP) is operated at a higher speed during the second phase (P2) than during the first phase (P1, P1').

9. Dishwasher (GS) according to claim 8, **characterised in that** essentially a quantity of fluid of between 0.1 and 1 l, in particular between 0.2 and 0.5 1, can be added from the drying means (ZEO).

10. Dishwasher (GS) according to claim 8 or 9, **characterised in that** a sorption drying system for exothermic drying, in particular of cleaned items, is provided, which comprises the drying means (ZEO) suitable for exothermic drying.

11. Dishwasher (GS) according to claim 10, **characterised in that** the drying means (ZEO) is reversibly dehydratable and in particular features zeolite.

12. Dishwasher (GS) according to claim 10 or 11, **characterised in that** means for heating the first quantity of fluid, in particular an air heater (HZ), are provided during the desorption process of the drying means (ZEO).

13. Dishwasher (GS) according to at least one of claims 8 to 12, **characterised in that** a water heater (WZ) is provided to heat the second quantity of fluid during the second phase (P2).

14. Dishwasher (GS) according to at least one of claims 8 to 13, **characterised in that** the circulation pump (UP) is at least periodically in the true running state during the second phase (P2).

15. Dishwasher (GS) according to at least one of claims 8 to 14, **characterised in that** the dishwasher is configured to perform a plurality of program steps (V, R, Z, K, T), of which in at least one program step with a cleaning action, in particular a program step wash (R), with the addition of detergent, the stored quantity of fluid can be added.

## Revendications

1. Procédé de fonctionnement d'un lave-vaisselle (GS), en particulier d'un lave-vaisselle ménager dans lequel pendant au moins une première phase (P1, P1'), la marche se fait avec une première quantité de liquide prédéfinie et cette première quantité de liquide est chauffée par le processus de désorption d'un produit de séchage (ZEO), cette première quantité de liquide étant élevée à la valeur d'une deuxième quantité de liquide en ce qu'une quantité de liquide stockée dans le produit de séchage (ZEO) est amenée et dans lequel pendant une deuxième phase (P2), la marche se fait avec la deuxième quantité de liquide prédéfinie,
**caractérisé en ce que**
pendant la première phase (P1, P1') et la deuxième phase (P2) la quantité de liquide respective est mise en circulation au moyen d'une pompe de recirculation (UP), cette pompe de recirculation (UP) étant en service pendant la deuxième phase (P2) dans un régime supérieur à celui de la première phase (P1, P1').

2. Procédé selon la revendication 1, **caractérisé en ce que**, venant du produit de séchage (ZEO), est amenée essentiellement une quantité de liquide entre 0,1 et 1 L, en particulier entre 0,2 et 0,5 L.

3. Procédé selon la revendication 1 ou 2, **caractérisé en ce que** le produit de séchage (ZEO) est un produit de séchage (ZEO) convenant au séchage exothermique, en particulier destiné au séchage de vaisselle nettoyée.

4. Procédé selon la revendication 3, **caractérisé en ce que** le produit de séchage est un produit de séchage réversiblement déshydrogénable (ZEO), en particulier la zéolithe, d'un système de séchage par sorption.

5. Procédé selon au moins l'une des revendications 1 à 4, **caractérisé en ce que** pendant la deuxième phase (P2) une quantité de liquide est chauffée par un chauffage de l'eau.

6. Procédé selon l'une des revendications 1 à 5, **caractérisé en ce que** la pompe de recirculation (UP) est mise en service pendant au moins une partie de la deuxième phase (P2) dans un état de rotation.

7. Procédé selon au moins l'une des revendications 1 à 6, **caractérisé en ce que** la quantité de liquide stockée est amenée pendant l'étape de programme d'une pluralité d'étapes de programmes (V, R, Z, K, T) avec action nettoyante, en particulier avec l'étape de programme Nettoyage (R) prévoyant l'ajout d'un produit de nettoyage.

8. Lave-vaisselle (GS) en particulier lave-vaisselle ménager effectuant au moins pendant une première phase (P1, P1') une marche avec une première quantité de liquide prédéfinie, dans lequel le chauffage de la première quantité de liquide se fait par le processus de désorption d'un produit de séchage (ZEO) et l'augmentation de la première quantité de liquide à la valeur d'une deuxième quantité de liquide se fait en ce qu'une quantité de liquide stockée dans le produit de séchage (ZEO) est amenée, et qui effectue pendant une deuxième phase (P2) une marche avec la deuxième quantité de liquide,
**caractérisé en ce que**
une pompe de recirculation (UP) est prévue pour la circulation de la quantité de liquide respective pendant la première et la deuxième phase (P1, P1', P2), cette pompe de recirculation (UP) fonctionnant pendant la deuxième phase (P2) à un régime supérieur à celui de la première phase (P1, P1').

9. Lave-vaisselle (GS) selon la revendication 8, **caractérisé en ce que**, venant du produit de séchage (ZEO), peut être amenée essentiellement une quantité de liquide entre 0,1 et 1 L, en particulier entre 0,2 et 0,5 L.

10. Lave-vaisselle (GS) selon la revendication 8 ou 9, **caractérisé en ce qu'**un système de séchage par sorption est prévu pour un séchage exothermique, en particulier de vaisselle nettoyée, qui comprend un produit de séchage (ZEO) convenant à un séchage exothermique.

11. Lave-vaisselle (GS) selon la revendication 10, **caractérisé en ce que** le produit de séchage (ZEO) est réversiblement déshydrogénable, et possède en particulier une zéolithe.

12. Lave-vaisselle (GS) selon la revendication 10 ou 11, **caractérisé en ce que** des moyens de chauffage de la première quantité de liquide sont prévus, en particulier un chauffage à air (HZ) pendant le processus de désorption du produit de séchage (ZEO).

13. Lave-vaisselle (GS) selon au moins l'une des revendications 8 à 12, **caractérisé en ce que** le chauffage de l'eau (WZ) destiné au chauffage de la deuxième quantité de liquide est prévu pendant la deuxième phase (P2).

14. Lave-vaisselle (GS) selon au moins l'une des revendications 8 à 13, **caractérisé en ce que** la pompe de recirculation (UP) se trouve pendant au moins une partie de la deuxième phase (P2) dans un état de rotation.

15. Lave-vaisselle (GS) selon au moins l'une des revendications 8 à 14, **caractérisé en ce que** le lave-vaisselle sert à exécuter une pluralité d'étapes de programme (V, R, Z, K, T) dont, pour au moins une étape de programme avec action nettoyante, en particulier une étape de programme Nettoyage (R) prévoyant l'ajout de produit de nettoyage, la quantité de liquide stockée peut être amenée.
